# EUROPEAN PATENT APPLICATION

(11) **EP 2 846 610 A2**
(43) Date of publication of application: **11.03.2015**
(21) Application number: 14183281.6
(22) Date of filing: 02.09.2014
(51) Int. Cl.: H05B 33/08

(54) **Light emitting diode lamp using alternating current voltage**

(30) Priority: 04.09.2013 KR 20130106050
(71) Applicant: Lumirich Co., Ltd., Incheon 406-840 (KR)
(72) Inventor: Kim, Ha-Chul, 135-956 Seoul (KR); Chong, Hwa-Gune, 406-842 Incheon (KR)
(74) Representative: Manitz, Finsterwald & Partner GbR

(57) **Abstract**

A light emitting diode lamp includes: a pair of first pins which are electrically connected to one another; a pair of second pins which are electrically connected to one another; a light emitting diode device module having one or more light emitting diode devices; a bridge diode which is electrically connected to the first pins and the second pins so as to be applied with external alternating current via the first pins and the second pins and converts the applied alternating current to direct current and is connected to both ends of the light emitting diode device module so as to supply the converted direct current to the light emitting diode device module; and one or more inductors which are provided between at least one of the pair of the first pins and the pair of the second pins and the bridge diode.

## Description

### [Technical Field]

The present invention relates to a light emitting diode lamp, and more particularly to a light emitting diode lamp which can be used by being directly connected to ordinary alternating current voltage without using a switching mode power supply (SMPS) which is needed for operating a conventional light emitting diode lamp and is expensive.

### [Background Art]

A conventional fluorescent lamp is generally applied with alternating current of 90 to 1,500V (peak voltage) to emit light. On the other hand, a light emitting diode (LED) lamp is a device which can substitute such a conventional fluorescent lamp and a high intensity discharge lamp, and emits light by converting alternating current of high voltage inputted into a SMPS to direct current of less than 90V and applying the converted direct current to the LED lamp. As such, a conventional LED lamp emits light using the SMPS which is an electrical power device.

Since as such the LED lamp is a semiconductor which uses direct current, there are problems in life span and operation of the LED lamp if alternating current which is applied to a fluorescent lamp is applied to the LED lamp, and there may be risks such as breaking, explosion, or fire in case that the LED lamp is connected to a ballast for operating a fluorescent lamp. For this reason, in order to substitute a fluorescent lamp with an LED lamp, a ballast for a conventional fluorescent lamp is generally substituted with an SMPS for the LED lamp. Accordingly, cost for substitution work occurs and the expensive SMPS is used, overall cost increases.

In order to solve this problem, there is a necessity of lighting an LED lamp using alternating current of 90 to 250V without using an expensive SMPS.

A conventional LED lamp adopts a technology for converting alternating current of low voltage (generally AC 12-24V) or direct current (DC of less than 90V) into constant current for driving a light emitting diode. For example, a method of converting AC voltage into DC voltage using a bridge diode and adding a current regulating diode (CRD) or a resistor at the front end of a light emitting diode device to light a light emitting diode device has been known. This method can be advantageously used for a light emitting diode lamp of relatively lower voltage range of AC 12 to 24V, e.g., a lighting device for a vehicle using a battery of 12V.

However, an LED lamp for use in a house or an office may be broken or explode in a condition in which a minimum voltage is higher than AC 90V, and there may also be a problem of flickering.

Circuits which solve these problems and can operate an LED lamp with alternating current of higher than 90V are being developed. For example, if high voltage of higher than AC 90V is applied, a bridge diode coverts alternating current to direct current and constant current is generated via a constant current circuit using a transistor, and the generated constant current is applied to an LED device.

However, an LED lamp with such a circuit is useful as a technology which excludes an expensive SMPS, but it is difficult to be actually used because it has some problems.

Firstly, when voltage varies between AC 90 to 120V, output current (output of transistor constant current circuit) fluctuates a lot so that current applied to an LED device may rapidly change in response to voltage change, it is difficult to ensure the credibility of an LED device and there is a problem in that electric power consumption alters depending on conditions of applied voltages. Further, there is a flickering phenomenon that an LED lamp repeats ON and OFF in very short times may occur in a frequency range of about 50Hz, so in such case users of an LED lamp may feel dizzy or eye strain. For these reasons, it is very difficult to actually apply this.

Secondly, since it does not have a circuit for compensating a power factor, it has a poor power factor and a poor light efficiency, and since a method for generating constant current is unstable so that although it is formed as 20W level of the electric power consumption in a specific environment, i.e., in AC 220V, the electric power consumption may become above 27W in a situation in which AC 225V is applied, so an LED lamp may be broken.

### [Detailed Description of the Invention]

### [Technical Problem]

The present invention has been made in an effort to provide a light emitting diode lamp in which an expensive SMPS for an LED can be excluded, can stably and easily be used above AC 90V, flickering phenomenon can be minimized under the condition of frequency of 50Hz, and has a circuit which can prevent problems of decrease of life span, malfunction, increase of electric power consumption, safety accident, or the like of an LED lamp which uses alternating current of high voltage (higher than AC 90V).

Concretely, the present invention has been made in an effort to provide a light emitting diode lamp which can be used with a ballast for a conventional fluorescent lamp using alternating current of higher AC 90V and can be directly used to alternating current of 100 to 250V without a ballast for a conventional fluorescent lamp. Accordingly, work for substituting a conventional lighting device with an LED lamp can be performed by only replacement of an LED lamp without additional work, and at the same time in case that the lift span of a ballast of a conventional fluorescent lamp expires, an LED lamp can remain to be used to an alternating current source only if a ballast is removed.

### [Technical Solution]

A light emitting diode lamp according to an exemplary embodiment of the present invention includes: a pair of first pins which are electrically connected to one another; a pair of second pins which are electrically connected to one another; a light emitting diode device module having one or more light emitting diode devices; a bridge diode which is electrically connected to the first pins and the second pins so as to be applied with external alternating current via the first pins and the second pins and converts the applied alternating current to direct current and is connected to both ends of the light emitting diode device module so as to supply the converted direct current to the light emitting diode device module; and one or more inductors which are provided between at least one of the pair of the first pins and the pair of the second pins and the bridge diode.

The one or more inductors may include a first inductor which is electrically connected respectively to the pair of the first pins and the bridge diode and a second inductor which is electrically connected respectively to the pair of the second pins and the bridge diode.

The light emitting diode lamp may further include a condenser which is connected to the light emitting diode device module in parallel.

The light emitting diode lamp may further include an excessive voltage blocking element which is connected to the light emitting diode device module in parallel.

The light emitting diode lamp may further include a fuse which is connected to the light emitting diode device module.

The light emitting diode lamp may further include a ballast which is connected respectively to the pair of the first pins and the pair of the second pins.

The light emitting diode lamp may further include a pair of bases to which the pair of the first pins and the pair of the second pins are respectively connected, and the ballast may be mounted to one of the pair of the bases.

The light emitting diode lamp may further include a printed circuited board to which the light emitting diode device module is mounted, and the ballast may be mounted to the printed circuit board.

### [Advantageous Effects]

According to the present invention, an LED lamp can be used by being directly connected to alternating current of 100 to 250V without a ballast, so that an expensive SMPS for an LED lamp can be excluded.

Further, since an LED lamp is manufactured separately from a ballast of a fluorescent lamp and various protection functions are provided, an LED lamp can be used by being directly connected to a ballast of a conventional fluorescent lamp and can be used by being directly connected to alternating current of 100 to 250V so that an expensive SMPS for an LED lamp can be excluded.

Further, since flickering phenomenon can be prevented or minimized under the condition of frequency of 50Hz, it is possible to provide an LED lamp having a circuit which can prevent problems of decrease of life span, malfunction, increase of electric power consumption, safety accident, or the like of an LED lamp which uses alternating current of high voltage (for example, higher than AC 90V).

### [Brief Description of Drawings]

FIG. 1 is a circuit diagram of a light emitting diode lamp according to an embodiment of the present invention.
FIG. 2 is a drawing showing an example in which a light emitting diode lamp according to an embodiment of the present invention is realized as a type of a fluorescent lamp.

### <Descriptions of Reference Numerals>

11: first pin
13: second pin
21: first inductor
23: second inductor
30: light emitting diode device module
40: bridge diode
50: condenser
60: excessive voltage blocking element
70: fuse
100: light transmitting cover
200: base
300: printed circuit board
400: heat radiation member
610: electrical terminal

### [Detailed Description of the Embodiments]

Embodiments of the present invention will be described in detail hereinafter with reference to the accompanying drawings.

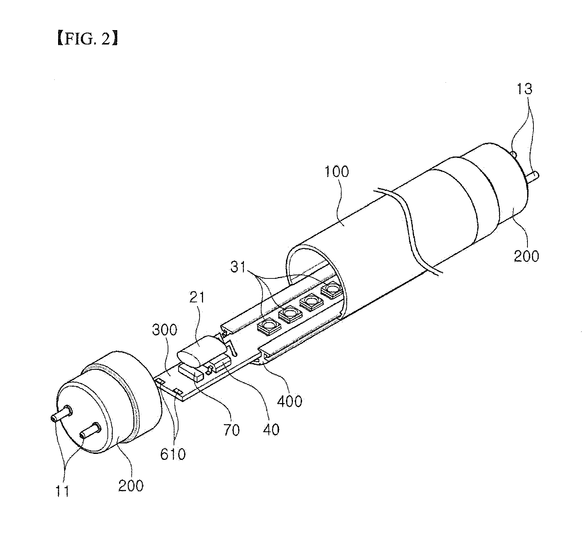

A pair of first pins 11 and a pair of second pins 13 are provided. For example, as exemplarily shown in FIG. 2, in case that a light emitting diode lamp according to an embodiment of the present invention is realized as a type of a fluorescent lamp, the first pins 11 and the second pins 13 may be provided to be respectively protruded from bases 200 which are respectively coupled to both sides of a light transmitting cover 100.

At this time, the pair of the first pins 11 are electrically connected to one another, and similarly the pair of the second pins 13 are also electrically connected to on another.

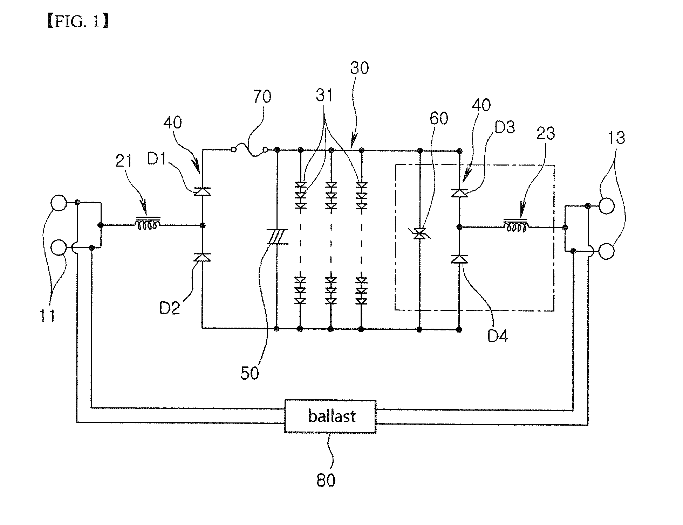

One or more inductors 21 and 23 may be disposed between at least one of the pair of the first pins 11 and the pair of the second pins 13 and a light emitting diode device module 30. For example, referring to FIG. 1, the first inductor 21 is electrically connected to the pair of the first pins 11 which are electrically connected to one another, and the second inductor 23 is electrically connected to the pair of the second pins 13 which are electrically connected to one another. Although two inductors 21 and 23 are provided in FIG. 1, one of them may be omitted and the position thereof may also be varied.

The light emitting diode device module 30 includes one or more light emitting diode devices 31. The light emitting diode device 31 may be a conventional light emitting diode device which emits light by being applied with direct current.

A bridge diode 40 is connected respectively to the first inductor 21 and the second inductor 23 so as to be applied with alternating current via the first pins 11 and the second pins 13. Further, the bridge diode 40 is connected to both ends of the light emitting diode device module 30 such that alternating current applied via the first inductor 21 and the second inductor 23 is rectified to direct current type and is then supplied to the light emitting diode device module 30. That is, the bridge diode 40 is electrically connected respectively to the first and the second inductors 21 and 23 and the light emitting diode device module 30 and rectifies external alternating current which is applied via the first and the second pins 11 and 13 into direct current type and then supplies the same to the light emitting diode device module 30. Further, the bridge diode 40 plays a role of converting alternating current to be nonpolar in addition to a role of converting alternating current to direct current. The light emitting diode device 31 is operated by direct current supplied via the bridge diode 40 to emit light.

As is known in the art, the bridge diode 40 may be formed with four rectification diodes D1, D2, D3 and D4, and description of the operation of the bridge diode 40 will be omitted. Although it is shown in the drawing that two rectification diodes D1 and D2 are disposed at the side toward the first pins 11 and the other two rectification diodes D3 and D4 are disposed to the side toward the second pins 13, the four rectification diodes D1, D2, D3 and D4 are connected to one another to form one bridge diode 40.

The light emitting diode lamp according to an embodiment of the present invention can be used by being connected directly to alternating current voltage (for example alternating current voltage of 90 to 250V) without using expensive SMPS by these configurations.

Meanwhile, as shown in FIG. 1, a condenser 50 may be connected to the light emitting diode device module 30 in parallel. The condenser 50 is connected to an input terminal and an output terminal of the light emitting diode device module 30 in parallel to play a role of preventing flickering of the light emitting diode lamp.

The inductors 21 and 23 which have been described above may play a role of compensating increase of phase difference of voltage and current which is caused by deterioration of power factor of a light emitting diode lamp due to the condenser 50 which is provided for preventing the flickering of the light emitting diode lamp. In addition, the inductors 21 and 23 may also play a role of stabilizing excessive current to constant current so as to make circuit stable.

Meanwhile, an excessive voltage blocking element 60 may be connected to the light emitting diode device module 30 in parallel. The excessive voltage blocking element 60 blocks large abnormal voltage from being applied to the light emitting diode device module 30 so as to protect the light emitting diode device 31, and may be realized as a TVS diode, a Zener diode, a varistor or the like. For example, in case of occurrence of very large abnormal voltage, the abnormal voltage is bypassed through the excessive voltage blocking element 60 without being applied to the light emitting diode device module 30 so that the light emitting diode device 31 can be protected.

A fuse 70 may be connected to a light emitting diode device module 30. The fuse 70 is a circuit stabilization element for protecting the light emitting diode device module 30, and in case that this is provided together with the excessive voltage blocking element 60, it can protect secondly the light emitting diode device module 30 in case that the excessive voltage blocking element 60 is destroyed.

Concrete configuration of the light emitting diode lamp according to an embodiment of the present invention will be described with reference to FIG. 2.

As shown in FIG. 2, the light emitting lamp may have shape of a conventional fluorescent lamp, and the bases 200 may be provided respectively to both sides of the light transmitting cover 100, and the pair of the first pins 11 and the pair of the second pins 13 are respectively provided to both bases 200.

The light emitting diode device 31 may be mounted on a printed circuit board 300, and the inductors 21 and 23, the bridge diode 40, the condenser 50, the excessive voltage blocking element 60, the fuse 70, and the like may also be mounted on the printed circuit board 300. Further, a heat radiation member 400 may be coupled to a rear side of the light transmitting cover 100, and the printed circuit board 300 is connected to the heat radiation member 400 so that heat generated in the light emitting diode device 31 can be effectively radiated.

Electrical terminals 610 for electrical connection with the first pins 11 may be provided at one end of the printed circuit board 300. Meanwhile, not shown in the drawing, electrical terminals for electrical connection with the second pins 13 may be provided at the other end of the printed circuit board 300.

The light emitting diode lamp having a shape of a conventional fluorescent lamp as shown in FIG. 2 can be used by being directly connected to alternating current source.

Meanwhile, referring to FIG. 1, the light emitting diode lamp according to an embodiment of the present invention may further include a ballast 80. Four terminals of the ballast 80 may be respectively connected to the pair of the first pins 11 and the pair of the second pins 13. At this time, not shown in the drawing, the ballast 80 may be mounted to one of the bases 200 or to the printed circuit board 300.

Since the ballast 80 is integrally provided to the light emitting diode lamp, the light emitting diode can be used by being connected to alternating current source like a conventional fluorescent lamp without an SMPS.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A light emitting diode lamp comprising:
a pair of first pins which are electrically connected to one another;
a pair of second pins which are electrically connected to one another;
a light emitting diode device module having one or more light emitting diode devices;
a bridge diode which is electrically connected to the first pins and the second pins so as to be applied with external alternating current via the first pins and the second pins and converts the applied alternating current to direct current and is connected to both ends of the light emitting diode device module so as to supply the converted direct current to the light emitting diode device module; and
one or more inductors which are provided between at least one of the pair of the first pins and the pair of the second pins and the bridge diode.

2. The light emitting diode lamp of claim 1, wherein the one or more inductors comprises a first inductor which is electrically connected respectively to the pair of the first pins and the bridge diode and a second inductor which is electrically connected respectively to the pair of the second pins and the bridge diode.

3. The light emitting diode lamp of claim 1, further comprising a condenser which is connected to the light emitting diode device module in parallel.

4. The light emitting diode lamp of claim 1, further comprising an excessive voltage blocking element which is connected to the light emitting diode device module in parallel.

5. The light emitting diode lamp of claim 1, further comprising a fuse which is connected to the light emitting diode device module.

6. The light emitting diode lamp of claim 1, further comprising a ballast which is connected respectively to the pair of the first pins and the pair of the second pins.

7. The light emitting diode lamp of claim 6, further comprising a pair of bases to which the pair of the first pins and the pair of the second pins are respectively connected, and the ballast is mounted to one of the pair of the bases.

8. The light emitting diode lamp of claim 6, further comprising a printed circuited board to which the light emitting diode device module is mounted, and the ballast is mounted to the printed circuit board.
